# EUROPEAN PATENT APPLICATION

(11) **EP 4 557 191 A1**
(43) Date of publication of application: **21.05.2025**
(21) Application number: 23209929.1
(22) Date of filing: 14.11.2023
(51) Int. Cl.: G06Q 10/06, G06Q 10/10

(54) **UBOFINDER**

(71) Applicant: Mancini, Eugenio, 20121 Milan (MI) (IT); Galimberti, Lucrezia, 20121 Milan (MI) (IT); Patrizi Montoro, Filippo, 00186 Rome (IT); Merico, Ester, 73027 Minervino di Lecce (LE) (IT)
(72) Inventor: Mancini, Eugenio, 20121 Milan (MI) (IT); Galimberti, Lucrezia, 20121 Milan (MI) (IT); Patrizi Montoro, Filippo, 00186 Rome (IT); Merico, Ester, 73027 Minervino di Lecce (LE) (IT)

(57) **Abstract**

The present system and method is aimed at identifying through an algorithmic process the beneficial owner(s) of legal entities according to the EU anti-money laundering regulation.

A user can provide basic inputs to the software without needing to apply by themselves the complex legal criteria set out by the EU regulation and to risk operative and legal errors.

## Description

This algorithmic process is aimed at identifying the "beneficial owner(s)" of any legal entity for the purposes of anti-money laundering legislation applicable in the Member States of the European Union.

### INTRODUCTION

The EU legislation on anti-money laundering has introduced some decades ago the duty for the ss.cc. "obliged entities" (banks, investment firms, lawyers, etc.) to identify the beneficial owner(s) of their clients, i.e. the natural person in whose interest a transaction or activity is being conducted.

The legal criteria to identify the beneficial owner(s) are straightforward when clients are natural persons, but quite complex when clients are legal entities. Moreover, the legal criteria to identify the beneficial owner(s) are currently set out in an EU directive, thus EU Member States have broad discretion on how to practically implement those criteria in their country. The result is that, as of today, 27 Member States have adopted different criteria for the identification of beneficial owner(s).

This situation is however about to change, since the European Union is in the process of adopting an EU regulation aimed at setting directly at EU level the legal criteria to identify the beneficial owner(s) in all the 27 Member States.

In this context, the identification of beneficial owner(s) is currently performed manually. More specifically, it is fairly usual that the identification of beneficial owner(s) of legal entities is outsourced to specialized law firms which, having acquired the corporate documents related to the shareholding chain of the relevant legal entity, apply the legal criteria set out by the law in order to assess the identity of the beneficial owner(s) of that legal entity. There is currently no automatic and computerized process in place for the identification of the beneficial owner(s) of legal entities, apart from an algorithm set out by an Italian player which, however, is limited to the Italian law, and thus does not cover the new criteria for the identification of the beneficial owner(s) of legal entities that will be in place once the EU regulation enters into force, nor there is evidence that this invention has been patented. Moreover, there is no evidence that an invention similar of the process set out in this application has been patented in the European Union.

The purpose of the present invention is to structure an algorithmic process aimed at automatically identifying the beneficial owner(s) of a legal entity according to criteria set out by the EU regulation. The invention would allow the user of the algorithmic process to simply put in the software the name of the legal entity whose beneficial ownership has to be assessed - and, eventually, additional information should the process needs so - and having the beneficial owner(s) of that legal entity identified, without the need to run manual assessments which would entail the user to assume both legal and operative risks in case of mistakes.

### SUMMARY

The invention is defined by the appended independent claims. Additional features and advantages of the concepts disclosed herein are set forth in the description which follows. The features and advantages of the concepts may be realized and obtained by means of the instruments and combinations particularly pointed out in the appended claims. These and other features of the described technologies will become more fully apparent from the following description and appended claims.

The present disclosure describes methods and arrangements for identifying the beneficial owner(s) (for the purpose of EU regulation on anti-money laundering that will enter into force) of legal entities through an automatic process. This process would enable the user to identify, within moments, the beneficial owner(s) of legal entities through a software, which operates in two stages: (i) the first stage involves the automatic acquisition of all relevant legal documentation of the legal entity and its shareholding chain, and (ii) the second stage involves the application, through an algorithmic process, of the criteria set forth in the new EU regulation in order to identify the beneficial owner(s) of the relevant legal entity.

The invention is particularly useful for: (i) the ss.cc. "obliged entities", i.e. those entities identified by the new EU regulation as entities having to identify the beneficial owner(s) of their clients, and (ii) the legal entities themselves, which - according to Directive (EU) 2015/849 - have to identify their beneficial owner(s) and then communicate their beneficial owner(s) to the central register in place in their Member State. The process, as mentioned, would embed a unitary algorithm, which would be automatically updated if new criteria regarding the identification of beneficial owner(s) of legal entities enter into force or if existing criteria are subject to amendments.

### BRIEF DESCRIPTION OF THE DRAWINGS

In order to best describe the manner in which the above-described process is implemented, as well as define other advantages and features of the disclosure, a more particular description is provided below and is illustrated in the appended drawings. Understanding that these drawings depict only exemplary embodiments of the invention and are not therefore to be considered to be limiting in scope, the examples will be described and explained with additional specificity and detail through the use of the accompanying drawings in which:
FIG. 1 illustrates the steps which the process performs in order to acquire all the corporate documentation regarding the shareholding structure of the legal entity in respect to which the beneficial owner(s) has/have to be identified.
FIG. 2 illustrates the application by the algorithm embedded in the process of the criteria set out in the EU regulation in order to assess the beneficial owner(s) of the relevant legal entity, once the corporate documentation have been acquired in the process by the software.
FIG. 3 illustrates the outcome that the process would present to the user as a result of the analyses above.

### DETAILED DESCRIPTION

Various embodiments of the disclosed methods and arrangements are discussed in detail below. While specific implementations are discussed, it should be understood that this is done for illustration purposes only. A person skilled in the relevant art will recognize that other configurations and steps may be used without parting from the spirit and scope of the disclosure.

The identification of the beneficial owner(s) of a legal entity for the purpose of EU anti-money laundering regulations will be performed by all EU Member States, as well as by those jurisdictions willing to abide by regulations substantially equivalent to those that will be adopted at EU level (as it has happened for the United Kingdom), according to certain criteria which will be deemed as final once the draft EU regulation (available here - COM(2021) 420 final 2021/0239 (COD)) is entered into force. As of the date of this document, the relevant criteria are set out under Article 42 of the draft EU regulation, although the invention shall be intended to refer to the final criteria that will be adopted once the draft EU regulation is approved in its final form. The invention is thus intended to cover the algorithmic process for the identification of beneficial owner(s) of legal entities that will be enshrined in the EU draft regulation once approved, in any amendments of those criteria (even by means of EU acts which would repeal the EU draft regulation) as well as in any national implementation of those criteria or exercise of national discretions concerning those criteria.

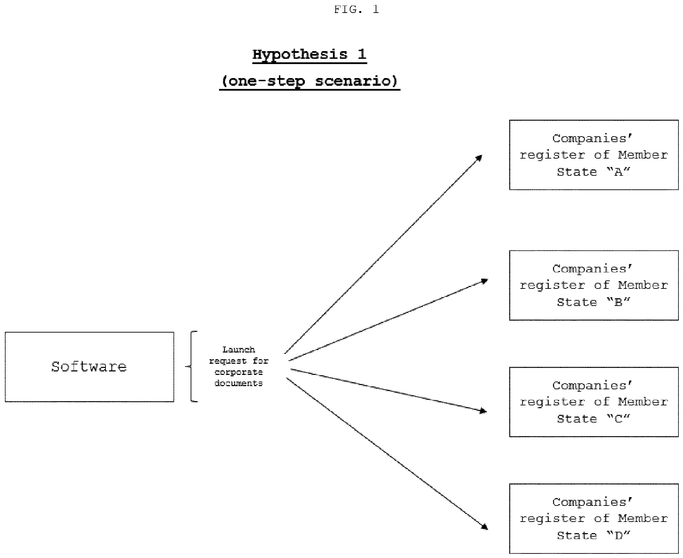

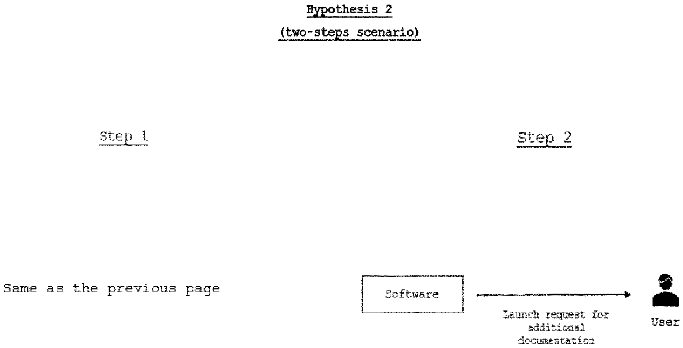

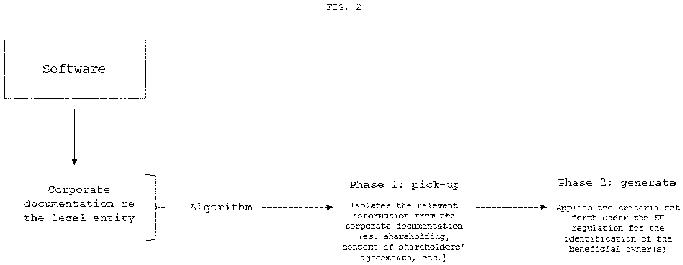

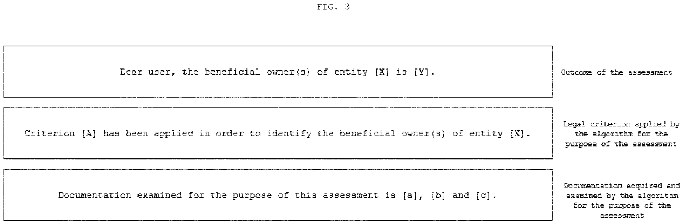

The invention consists in the algorithmic identification of beneficial owner(s) of legal entities according to the mentioned EU regulation. The identification requires the user to insert in a software the name of the legal entity in respect of which the beneficial owner(s) shall be identified. The software then performs a three-step process, which only eventually requires additional inputs from the user: (i) collection of the relevant documentation and information (FIG. 1); (ii) application of legal criteria to the documentation and information collected (FIG. 2); and (iii) issuance of the outcome to the user (FIG. 3). As detailed in the claims section, the invention covers not only the overall process, but also the single steps of the process as well as single acts in which a step is structured.

As per the collection of the documents and information, the identification of the beneficial owner(s) of a legal entity required first and foremost the acquisition of all the documentation and information about the relevant legal entity and any legal entity and natural person holding (i) shareholdings in that legal entity, (ii) rights over shareholdings in that legal entity (e.g. pledges), and (iii) other governance rights over that legal entity. Such information are usually contained in the excerpts issued by the local companies' registers, although in most complex structures additional documentation has to be obtained such as shareholders' agreements and similar. Such additional documentation is not always publicly available.

FIG. 1 provides an example in which the collection of the documentation and information can be structured. The example distinguishes between two hypotheses.

In hypotheses 1 the software receives the input from the user on the name of the legal entity in respect of which the beneficial ownership has to be assessed. The software then launches a request for documentation to the relevant companies' register in order to acquire the excerpt concerning the legal entity. Once acquired, the software runs the process in order to assess if there are any other legal entities holding shareholdings in the relevant legal entity and, if the result is positive, the software launches requests for documentation to the relevant companies' register in order to acquire the excerpts for those legal entities as well. The software repeats this process once it has acquired all the needed documentation concerning the shareholding of the relevant legal entity, and no inputs are needed from the user.

In hypotheses 2 the software performs exactly the same process described in hypotheses 1, although in such a case the software deems necessary - through key words or other algorithmic processes - to obtain documents which are not publicly available (e.g. shareholders agreements). In such a case, the user is requested to provide the software with such additional documentation in order to allow it to proceed to stage 2.

FIG. 2 provides an example of the functioning of the algorithm which is required to apply the criteria set out by the EU regulation for the identification of the beneficial owner(s) of the relevant legal entity.

The algorithm, which has access to the documentation and information collected by the software in FIG. 1, operates in two phases:
(i) phase 1: in the first phase, the algorithm picks up the relevant information for the identification of the beneficial owner(s);
(ii) phase 2: in the second phase, the algorithm analyses the information picked up in phase 1 in accordance with the criteria set out by the EU regulation in order to identify the beneficial owner(s) of the relevant legal entity.

FIG. 3 provides an example of the output that the process provides at the end of its assessment. As the outcome of the beneficial owner(s) assessment is required mostly by banks, financial institutions and similar (the ss.cc. "obliged entities" according to the anti-money laundering regulations), the outcome would specifically identify the beneficial owner(s) of the relevant legal entity, the legal criterion which has finally been applied by the algorithm for the identification of the beneficial owner(s) of the legal entity and the documentation acquired and examined by the algorithm for the purpose of the assessment.

## Claims

1. A **method** for identifying the beneficial owner(s) of legal entities, comprising:
identifying, according to pre-determined instructions in whatsoever form issued, the relevant documentation and information needed in order to extract information to be used in order to identify the beneficial owner(s) of legal entities;
extracting, from the documentation and information mentioned above, the information needed in order to identify the beneficial owner(s) of legal entities;
applying, according to pre-determined instructions in whatsoever form issued, legal criteria set out by EU regulations as well as national implementing provisions or national provisions exercising discretions granted by EU regulations in order to identify the beneficial owner(s) of legal entities.

2. A **system** comprising:
an interface where to insert information about a legal entity in order to perform, in full or in part, the assessments needed in order to identify the beneficial owner(s);
a processing unit for receiving information about a legal entity and
translating such information into outputs aimed at acquiring the documents and information needed in order to identify the beneficial owner(s) of that legal entity;
a processing unit for running an algorithm structured so as to applying the legal criteria set forth in the EU regulations in order to identify the beneficial owner(s) of a legal entity;
a processing unit for generating outputs concerning the beneficial owner(s) of a legal entity.

3. A **computer program product** comprising instructions which, when the program is executed by the system of claim 2, carries out the method of claim 1.

4. A **process** comprising instructions which, when executed, carries out the method of claim 1.
